# EUROPEAN PATENT SPECIFICATION

(11) **EP 0 709 348 B1**
(45) Date of publication and mention of the grant of the patent: **20.01.1999**
(21) Application number: 95116238.7
(22) Date of filing: 16.10.1995
(51) Int. Cl.: C03C 17/00, C03C 23/00

(54) **Method and device for removing coatings deposited on the surface of a glass plate**
Verfahren und Vorrichtung zum Entfernen von auf den Oberfläche einer Glasplatte abgesetzten Beschichtungen
Méthode et dispositif de l'enlèvement de revêtements déposés sur la surface d'une plaque en verre

(30) Priority: 28.10.1994 IT TV940126
(43) Date of publication of application: 01.05.1996
(73) Proprietor: Vianello Fortunato - Davanzo Nadia, dba FOR.EL. BASE di Vianello Fortunato & C. S.n.c., 31056 Vallio di Roncade (Treviso) (IT)
(72) Inventor: Vianello, Fortunato, I-31056 Vallio Di Roncade (Treviso) (IT); Moschini, Dino, I-31050 San Cipriano (Treviso) (IT)
(74) Representative: Modiano, Guido, Dr.-Ing.

(56) References cited:
- EP-A- 0 412 812
- WO-A-93/25487
- DE-A- 4 006 502
- GB-A- 803 371

## Description

The present invention relates to a method and a device for removing coatings that are deposited on the surface of a glass plate and are constituted by one or more layers that include at least one conducting layer.

Nowadays it is known to perform a treatment known as "low emissivity" during the manufacture of special glass plates; substantially, this treatment has the purpose of constituting a barrier to the passage of infrared rays and thus limiting the outward transmission of heat from indoor spaces.

This treatment consists in applying a plurality of layers of material on the entire surface of a glass plate, which must then be perimetrically associated, by means of a first butyl seal, at the lateral surfaces of a spacer frame so as to form the inner space of an insulating glazing unit.

A typical succession of layers, starting from the surface of the glass plate, for the so-called magnetron quality, is as follows: a first layer of non-conducting tin oxide that is strongly bonded to the glass, for a thickness of approximately 30 nm.

A second layer of conducting silver approximately 10 nm thick and a third layer of equally conducting aluminum approximately 3,5 nm thick are deposited or applied on the first layer.

A fourth layer of non-conducting tin oxide approximately 30 nm thick, with substantially protective features, is also provided.

The glass plates thus treated must be conveniently protected starting from packaging up to processing, until the time when they form the double-glazing unit and when they are no longer exposed to the aggression of atmospheric agents, since their treated surface is directed towards the inner space of the unit.

These layers, however, can become inalterable only if the continuity of the coating is interrupted towards the outer edge of the glass plate; this continuity, even if being atomic in thickness, would in fact be sufficient to trigger oxidation of the outer edge of the glass plate towards the inside of the insulating glazing unit, consequently compromising characteristics that are indispensable for a good quality of the insulating glazing unit, such as the bonding of the sealant that constitutes the second seal, the bonding of the sealant that constitutes the first seal, the effectiveness of the "low emissivity" coating, as well as their aesthetics.

Accordingly, it is known to fully remove the layers proximate to the edge of the glass plates.

It is therefore known to perform removal by using heat as an agent for removing the layers: it is accordingly known to use a combustible gas torch, whose flame is passed at said edge of the glass plate.

However, this solution has currently been abandoned, since insufficient quality of the result and objective difficulty in automating the method have been observed.

In the field, it is known also to totally remove the layers at the edge of the glass plate by grinding.

The support for the abrasive mix is usually constituted by a low-hardness rubber-like material, so that the action against the surface of the glass plate is as tolerable as possible.

This conventional method substantially consists in running along the perimeter of the glass plate with a grinder, generally of the peripheral type, the glass plate being placed on a horizontal surface, with the part to be treated facing up.

This conventional manual method has considerable drawbacks, since there is no control at all of the pressure of the grinder against the surface of the glass plate except for the control based on the mere sensitivity of the operator.

Furthermore, the produced dust contains abrasive particles and in any case other foreign particles constituted by the mix material, and constitutes a dangerous contaminant for the glass plate and particularly for its treated surface, which is highly sensitive, especially in the grinding treatment known as "edging" and in the subsequent treatments, which range from washing to the coupling of two or more glass plates to form the insulating glazing units.

It is also known to perform the removal by grinding with a semiautomatic method that differs from the preceding one in that the operation always occurs on a horizontal table where however, the feeding motion, in addition to the cutting motion is motorized.

However, manual work still occurs in the operations for centering the glass plate and for starting and stopping the grinders one side at a time.

In both these procedures, the effectiveness of dust aspiration is uncertain both due to the limited power installed on these machines and due to the horizontal position of the glass plate; considerable problems of contamination of the surface of the glass plate remain in any case.

It is then known to perform removal by grinding in an automatic manner: this removal occurs on a glass plate that is slightly arranged inclined with respect to the vertical plane, and in addition to being performed fully automatically around the entire perimeter of the glass plate, either by the simple feeding motion of the grinder or by combining the feeding motion of the grinder and of the glass plate, it also introduces an attempt to control the pressure of the grinder against the surface of the glass plate.

However, this control is not easy to be carried out, due to the size of the glass plate, since it is necessary to work at its rim and therefore in a borderline situation, due to the variability of the features of the grinder, since the diameter of the grinder varies according to wear and since the glass plate can be scratched in view of the limited thickness of the applied layers.

An example of the mentioned method is provided by European patent no. EP 0165232, whose solution, however, has all the above-mentioned drawbacks.

All conventional removal methods suffer the drawbacks of removing all the deposited layers and even of contaminating the surface of the glass plate, which thus becomes rough and changes its composition; these characteristics are not adapted for the correct bonding of the first seal, constituted by butyl sealant, and of the second seal, which is performed with polysulfide or polyurethane or silicone sealants.

Devices having features as in the preamble of claim 1, are known from the documents. DE-A-4006502, EP-A-412812 and GB-A-803371. A mechanical method for removing coating from glass plates is also disclosed in the document WO-A-9325487.

The aim of the present invention is therefore to solve the described technical problems, eliminating the drawbacks of the prior art, by providing a method and a device that allow to manually and automatically treat the edge of glass plates on which coatings, constituted by one or more layers including at least one conducting layer, are applied, and at the same time allow optimum bonding of the first and second seals to form the insulating glazing unit.

Within the scope of the above aim, an object is to achieve selective or controlled removal of the coating, optionally leaving a substrate bonded to the surface of the glass plate that has optimum adhesion characteristics for the sealants constituting the first seal and the second seal.

Within the scope of the above aim, another important object is to provide a method and a device that in no way contaminate the surface of the glass plate.

Another important object is to provide a method and a device that, as a consequence of the treatment of the edge of the glass plate, also allow to prevent oxidation of the layers and thus maintain all the physical and aesthetic characteristics of the treated glass plate.

Another object is to provide a device that allows a precise and preset delimitation of the treated surface of the glass plate.

Another object is to provide a device according to the invention that is reliable and safe in use.

This aim, these objects, and others which will become apparent hereinafter are achieved by a method for removing coatings, constituted by a plurality of layers including at least one conducting layer, that are applied to the surface of a glass plate, characterized in that it comprises: a first step for moving said glass plate to the vicinity of one or more electrodes; a second step for moving or positioning said one or more electrodes proximate to the edge of said glass plate; a third step, in which a current is circulated in said one or more electrodes; and a fourth step, in which said glass plate or said one or more electrodes are moved along said edge to selectively remove one or more of said layers; and by a device for removing coatings, with the features set forth in claim 1.

Further characteristics and advantages of the invention will become apparent from the following detailed description of some particular but not exclusive embodiments, illustrated only by way of non-limitative example in the accompanying drawings, wherein:

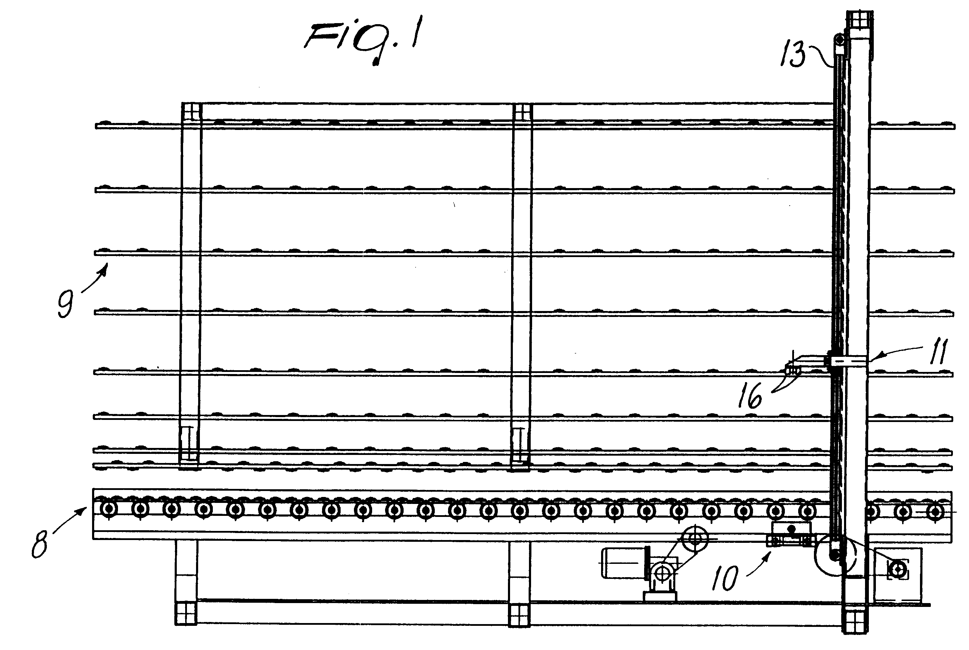

figure 1 is a front view of a rack and of a roller conveyor for conveying the glass plate, and of the device applied at horizontal and vertical carriages;

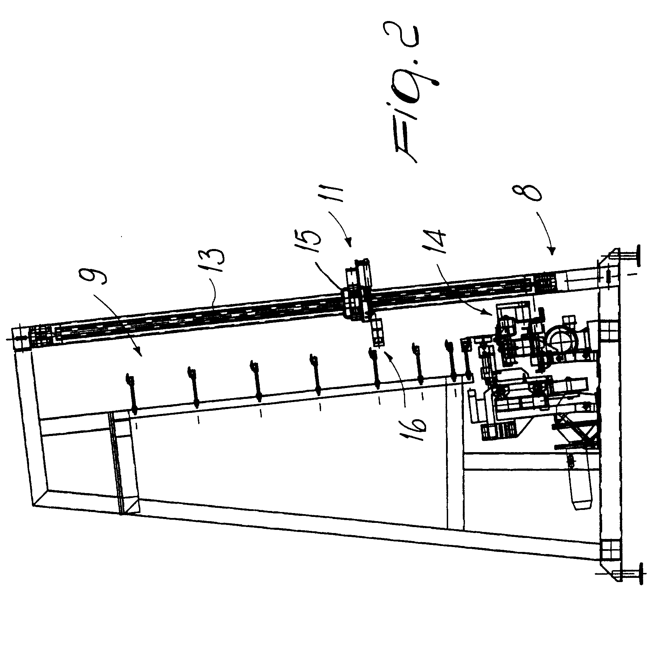

figure 2 is a side view of the elements of figure 1;

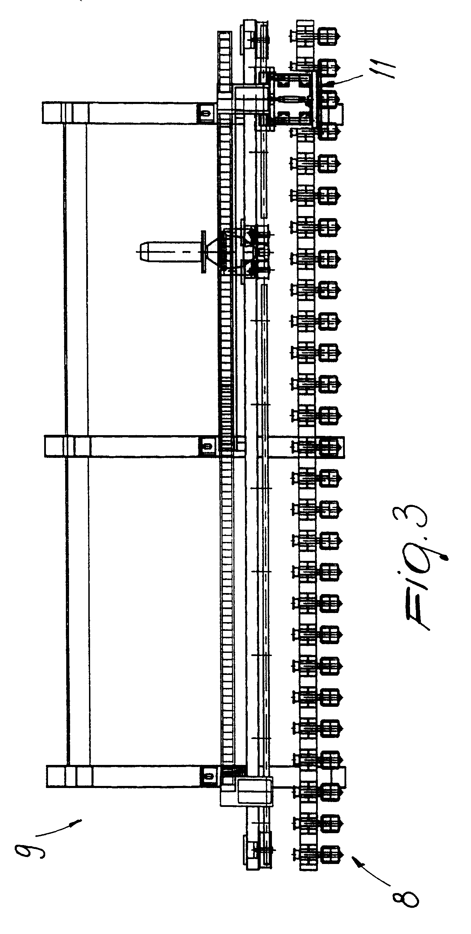

figure 3 is a top view of the elements of figure 1;
figure 4 is an enlarged-scale transverse sectional view of the application of a number of layers on the surface of a glass plate;
figures 5 and 6 are schematic top views of the use of the device in two possible embodiments;
figure 7 is a schematic view of the device;
figure 8 is an enlarged-scale, partially sectional, lateral perspective view of an example of selective layer removal;
figure 9 is a view, similar to figure 7, of a further embodiment of the device.

With reference to the above figures, the reference numeral 1 designates a glass plate that can be coupled to a similar glass plate by means of a first seal at a spacer frame, so as to constitute an inner space of an insulating glazing unit.

The spacer can be constituted by a closed profile that is internally hollow and has adapted fine holes on the surface located at the inner space and adapted hygroscopic materials inside.

Said glass plate 1 has a coating 3 applied thereto at the surface 2 that is to be in contact with the inner space of the insulating glazing unit (if total removal is performed); said coating is constituted by a plurality of layers of material for example of the type used for the so-called "low-emissivity" treatment or in any case for other treatments such as, in a non-limitative sense, those for producing a tinted or reflective or photochromic glass plate.

In the described solution, which is illustrated only by way of example, a first non-conducting layer 4 of tin oxides, over which a second conducting layer 5 of silver and a subsequent third layer 6 of aluminum are applied, have been considered.

There is also a fourth non-conducting layer 7 of tin oxide that has substantially protective features.

The glass plate 1 can be conveyed by means of an adapted roller conveyor 8 for lower support and of a vertical rack 9 for rear support; said roller conveyor and said rack allow to convey the glass plate to the coating removal device.

Said device is constituted by a first fixed head 10 and by a second movable head 11: the first head 10 acts at the lower edge 12 of the glass plate 1, whereas the second head 11 is associated with an adapted actuation means comprising a motorized belt 13 and is allowed to perform a sustantially vertical motion; both of said heads can rotate through 90° with respect to said belt.

There is also a first carriage 14 for feeding the glass plate in a horizontal direction; by means of appropriate suckers, said carriage engages the glass plate on the surface that lies opposite to the surface 2 and carries it toward the coating removal device.

There is also a second carriage 15 for the vertical movement of the second head 11.

Each one of said first and second heads has, in the particular illustrated solution, electrodes 16 that are supplied by adapted power sources and are adapted to cause the circulation of electric current and/or an electrical discharge at the surface of the coating 3 to achieve selective removal of one or more of the underlying layers.

The method in fact entails a first step, in which the glass plate is loaded onto the rack 9 and then carried up to a reference position for the first and second heads; a second step entails placing or moving said electrodes at the coating 3 proximate to the edge 12.

This is followed by a third step, in which the electrodes are supplied with power, and by a fourth step, in which the second head 11 performs a vertical upward stroke, selectively removing some layers of the coating 3 and in particular the fourth layer 7, the third layer 6, and the second layer 5.

An adapted sensor stops the second head 11 at the upper horizontal edge of the glass plate and simultaneously the second head 11 rotates through 90°, placing the electrodes at the edge 12 of the upper side of the glass plate.

At the same time, the first head 10 places the electrodes at the edge 12 of the lower side of the glass plate 1; then the roller conveyor 8 is actuated, causing the movement of the glass plate and consequently allowing to selectively remove the second, third, and fourth layers of the coating 3 until the end of the glass plate is reached.

At this point, the first head 10 moves the electrodes away from the glass plate and the second head 11 performs an additional 90° rotation and then moves downward and selectively removes the second, third, and fourth layers until, when it reaches the lower end of the glass plate, said glass plate is moved away or the electrodes are moved away therefrom.

The second head 10 is then replaced for the subsequent treatment of another glass plate.

Said first and second heads also have electric and/or electronic means that are adapted to produce the circulation of current and/or the discharge at the electrodes; if said means are of the electronic type, they can be constituted by appropriate circuits, schematically designated by the reference numeral 17, or can be constituted for example by a transformer 18, in which the primary winding 19 is associated with a power source and the secondary winding 20 is connected to the electrodes 16.

Selective removal of the second, third, and fourth layers occurs by means of the second layer 5 and of the third layer 6 which, by conducting, allow to close the circuit of the electrodes 16.

The fact that the fourth layer 7 is made of nonconducting material is not a problem; since it is a film at the atomic level, the discharge of the electrodes perforates it and closes on the internal layers constituted by metals that sublimate when the current flows.

Said current flow or the discharge of the electrodes does not affect the first layer 4, since it is nonconducting and since below said first layer there is only the glass plate, which is nonconducting too.

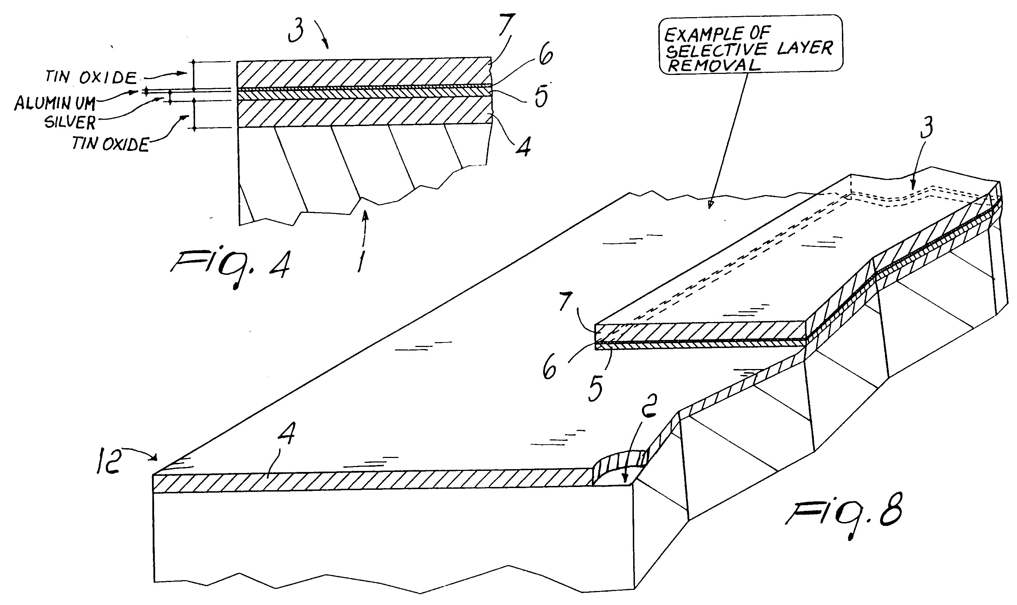

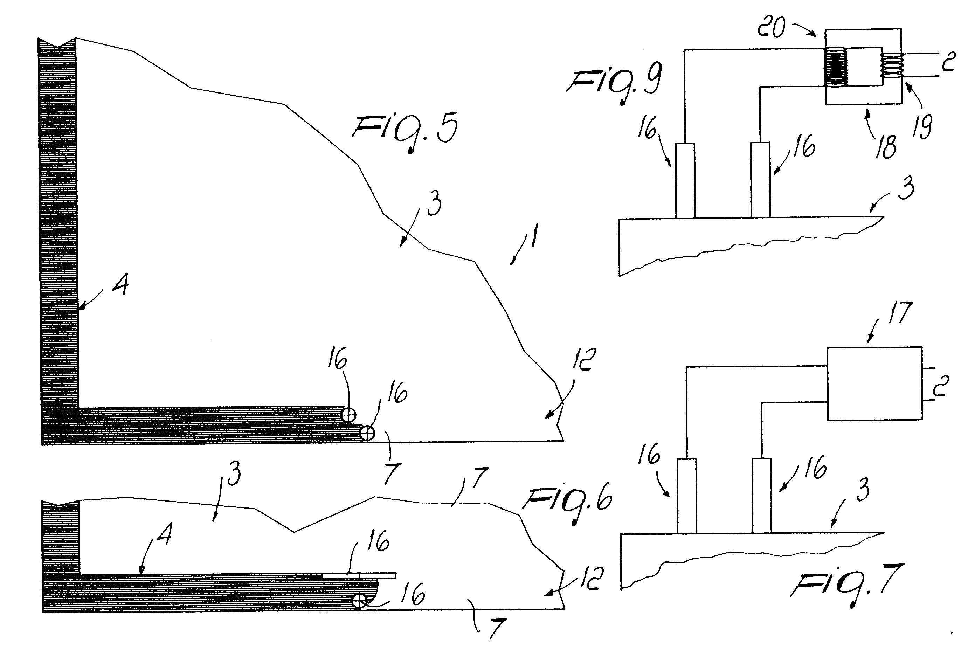

As regards the type and shape of the electrodes, they may be of the cylindrical type, as shown in figures 5, 7, and 9, or they may have a different shape; in figure 6, one of said electrodes has a cylindrical shape and the other one has a laminar shape.

The present invention is of course susceptible of numerous modifications and variations, all of which are within the scope of the same inventive concept.

Therefore, the type of the layers that constitute the coating might be any, so long as it contains electrically conducting layers, and likewise the combination of said layers might be any.

As an alternative, an electrode that allows to achieve selective removal by virtue of the emission of a laser beam can be associated with each one of the heads, whose number can be variable.

The device also comprises adapted electronically-controlled actuators for controlling the movement of the glass plate and/or of the heads that support the electrodes; said actuators handle, in a controlled manner, the conditions of the acceleration and deceleration gradients of said glass plate and/or said heads.

The device also comprises one or more aspirator hoods that are adapted to remove the gaseous products emitted during selective removal of the layer of the coating.

Conveniently, the electrodes can also be complemented by an adapted filler gas with protective or reactive functions.

The method can of course occur in a fully automatic or semi-automatic or manual manner.

Finally, it is noted that the selective or controlled removal of one or more layers of the coating of the glass plate can occur while said glass plate is arranged substantially vertically or on a horizontal or inclined plane.

The materials and the dimensions that constitute the individual components of the invention as well as the sequence of the steps of the method may of course also be the most pertinent according to the specific requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Device for removing a coating (3) comprising a plurality of layers (4-7) that include at least one conducting layer (5,6) and are deposited on the surface (2) of a glass plate (1), comprising at least one head (10,11) that can move along the edge (12) of said glass plate (1), said at least one head having at least one electrode (16) that is adapted to cause the circulation of electric current and/or an electrical discharge on said surface (2) to selectively remove one or more of said layers (4-7),
**characterized in that**
it further comprises an adapted roller conveyor (8) for lower and a rack (9) for rear support and transport of said glass plate (1), to said at least one head, said at least one head comprising a first fixed head (10) and a second movable head (11).

2. Device according to claim 1, characterized in that it further comprises controlled actuators for controlling movements of the glass plate and/or of the heads (10, 11) so that the coating (3) is selectively removed from a glass plate (1) coupleable to a similar or ordinary further simple glass plate, through a first seal, at a spacer frame so as to constitute the inner space of an insulating glazing unit, the spacer frame comprising a closed profile that is internally hollow, said profile having adapted fine holes on the surface located at the inner space, and containing inside hygroscopic materials, said glass plate (1) having, at the surface (2) that lies in contact with said inner space, the coating (3) that comprises a plurality of layers (4-7) of material of the type used for the so-called "low emissivity" treatment or for other treatments, such as those for producing a tinted or reflecting or photochromic glass plate.

3. Device according to claims 1 and 2, characterized in that said first head (10) acts at the lower edge (12) of said glass plate (1).

4. Device according to claims 1 and 2, characterized in that said second head (11) is movably associated with an adapted motorized belt (13) for moving substantially vertically and to rotate through 90° and 180° with respect to an axis of said belt (13).

5. Device according to claims 1, 3, and 4, characterized in that it further comprises a first carriage (14) for feeding said glass plate (1) in a horizontal direction, said first carriage (14) having suckers for engaging said glass plate (1) on the side that lies opposite to the one on which said coating (3) is applied and for conveying said glass plate toward said coating removal heads (10,11); a second carriage (15) for the vertical movement of said second head (11), each one of said first (10) and second (11) heads having a plurality of electrodes (16) that are supplied by appropriate sources and are adapted to cause the circulation of electric current and/or an electrical discharge at the surface of said coating (3) to selectively remove one or more of said underlying layers (4-7).

6. Device according to claims 1 and 5, characterized in that said first and second heads (10,11) have electric and/or electronic means (17,18) that are adapted to cause the circulation of current and/or the discharge at said one or more electrodes (16).

7. Device according to claims 1 and 6, characterized in that said means are of the electric type and are constituted by a transformer (18), in which the primary winding 19 is associated with a power source and the secondary winding (20) is connected to two electrodes (16).

8. Device according to claims 1, 6, and 7, characterized in that said one or more electrodes (16) have any adapted shape, such as a cylindrical and/or laminar one.

9. Device according to one or more of the preceding claims, characterized in that it comprises at least one head (10,11) which emits a laser beam for controlled removal of said coating constituted by a plurality of layers (4-7), said coating including possibly no conducting layers.

10. Method for removing coatings constituted by a plurality of layers (4-7) that include at least one conducting layer (5,6) and are applied to the surface (2) of a glass plate (1), characterized in that it comprises: a first step for moving said glass plate (1) to the vicinity of one or more electrodes (16); a second step for moving or positioning said one or more electrodes (16) proximate to the edge (12) of said glass plate (1); a third step, in which a current is circulated in said one or more electrodes (16); and a fourth step, in which said glass plate (1) or said plurality of electrodes (16) are moved along said edge to selectively remove one or more of said layers.

11. Method according to claim 10, characterized in that in said first step said glass plate is loaded on a rack and is carried to a reference position for a first head and a second head.

12. Method according to claim 10, characterized in that in said second step said electrodes (16) are moved or positioned at said coating (3) proximate to the edge (12) of said glass plate (1).

13. Method according to any of claims 10, 11 and 12, characterized in that said plurality of electrodes (16) are supplied with power in said third step, and in that in a fourth optionally simultaneous step said second head (11) performs an upward vertical stroke, selectively removing one or more of said layers (4-7) of said coating (3).

14. Method according to any of the claims 10-13, characterized in that an adapted sensor stops said second head (11) at the upper horizontal edge of said glass plate (1) and simultaneously said second head (11) performs a 90° rotation, arranging the electrodes (16) at the edge (12) of the upper side of said glass plate (1), said first head (10) simultaneously placing said one or more electrodes (16) at the edge (12) of the lower side of said glass plate (1), this being followed by the actuation of a roller conveyor (8) that is adapted to move said glass plate (1), and then by the selective removal of one or more of said layers (4-7) of said coating (3).

15. Method according to any of the claims 10-14, characterized in that said first head (10) moves further said one or more electrodes (16) away from said glass plate (1) and said second head (11) performs a further rotation through 90° and then moves downward and selectively removes said coating (3) until it reaches the lower end of said glass plate (1) and is then moved away from it.

16. Method according to any of the claims 10-15, characterized in that said glass plate (1) has straight or curved contours.

17. Method according to one or more of claims 10-16, characterized in that the movements of said glass plate (1) and/or of said at least one head (10,11) provided with said one or more electrodes (16) are performed by means of actuators that are controlled electronically and are adapted to handle, in a controlled manner, the conditions of acceleration and deceleration gradients of said glass plate (1) or of said at least one head (10,11).

18. Method according to one or more of claims 10-17, characterized in that it further comprises the step of removing the gaseous products released during the selective or controlled removal of said one or more layers of said coating by using one ore more adapted aspirator hoods.

19. Method according to one or more of claims 10-17, characterized in that said treatment electrodes (16) are complemented by an adapted filler gas with protective or reactive functions.

20. Method according to one or more of claims 10-17 and 19, characterized in that said selective or controlled removal is performed on said glass plate (1) while it is arranged on a substantially vertical or horizontal or inclined plane.

21. Method according to one or more of claims 10-17 and 19-21, characterized in that said selective controlled removal of said one or more layers (4-7) occurs in a fully automatic or semiautomatic or manual manner.

## Patentansprüche

1. Vorrichtung zum Entfernen eines Überzugs (3) aus mehreren auf der Oberfläche (2) einer Glasplatte (1) aufgebrachten Schichten (4 bis 7), von denen mindestens eine eine leitende Schicht (5, 6) ist, mit mindestens einem Kopf (10, 11). der entlang der Kante (12) der Glasplatte (1) bewegbar ist und mindestens eine Elektrode (16) hat, die ausgebildet ist, die Zirkulation elektrischen Stroms und/oder eine elektrische Entladung auf der Oberfläche zu erzeugen, um selektiv eine oder mehrere der Schichten (4 bis 7) zu entfernen,
**gekennzeichnet** durch
einen geeigneten Rollenförderer (8) zum Herabbewegen und ein Gestell (9) zum rückseitigen Stützen und zum Transportieren der Glasplatte (1) zu dem Kopf, der einen ersten festen Kopf (10) und einen zweiten beweglichen Kopf (11) enthält.

2. Vorrichtung nach Anspruch 1, **gekennzeichnet** durch angesteuerte Antriebsvorrichtungen zum Steuern der Bewegungen der Glasplatte und/oder der Köpfe (10, 11) derart, daß der Überzug (3) selektiv von einer Glasplatte (1) entfernt wird, die an eine ähnliche oder eine gewohnliche weitere einfache Glasplatte über eine erste Abdichtung an einem Abstandsrahmen koppelbar ist, um so den Innenraum einer isolierenden Verglasungseinheit zu bilden, wobei der Abstandsrahmen ein geschlossenes, innen hohles Profil hat, das geeignete Feinbohrungen an der an dem Innenraum angeordneten Fläche hat und im Inneren hygroskopische Materialien enthält, und die Glasplatte (1) an der in Kontakt mit dem Innenraum stehenden Oberfläche (2) den Überzug (3) hat, der mehrere Schichten (4 bis 7) eines Materialtyps enthält, der für die sogenannte "Niedrigemissivitätsbehandlung" oder andere Behandlungen wie dem Herstellen einer getönten oder reflektierenden oder fotochromen Glasplatte verwendet wird.

3. Vorrichtung nach Anspruch 1 und 2, dadurch **gekennzeichnet**, daß der erste Kopf (10) an der unteren Kante (12) der Glasplatte (1) einwirkt.

4. Vorrichtung nach Anspruch 1 und 2, dadurch **gekennzeichnet**, daß der zweite Kopf (11) beweglich mit einem geeigneten motorisierten Riemen (13) verbunden ist, um im wesentlichen vertikal bewegt und um 90° und 180° bezüglich einer Achse des Riemens (13) rotiert zu werden.

5. Vorrichtung nach Anspruch 1, 3 und 4, **gekennzeichnet** durch einen ersten Schlitten (14) zum Vorschieben der Glasplatte (1) in einer horizontalen Richtung, wobei der erste Schlitten (14) Sauger hat zum Fassen der Glasplatte (1) auf der Seite, die der mit dem Überzug (3) versehenen Seite abgewandt ist, und zum Befördern der Glasplatte zu den zum Entfernen des Überzugs bestimmten Köpfen (10, 11), und durch einen zweiten Schlitten (15) zum Bewegen des zweiten Kopfes (11) in vertikaler Richtung, wobei sowohl der erste (10) als auch der zweite (11) Kopf mehrere Elektroden (16) haben, die von geeigneten Quellen gespeist werden und ausgebildet sind, die Zirkulation elektrischen Stroms und/oder eine elektrische Entladung an der Oberfläche des Überzugs (3) zu verursachen, um selektiv eine oder mehrere der unterliegenden Schichten (4 bis 7) zu entfernen.

6. Vorrichtung nach Anspruch 1 und 5, dadurch **gekennzeichnet**, daß der erste und der zweite Kopf (10, 11) elektrische und/oder elektronische Mittel (17, 18) haben, die ausgebildet sind, die Stromzirkulation und/oder die Entladung an einer oder mehreren der Elektroden (16) zu verursachen.

7. Vorrichtung nach Anspruch 1 und 6, dadurch **gekennzeichnet**, daß die Mittel elektrischer Art sind und von einem Transformator (18) gebildet werden, in dem die Primärwicklung (19) mit einer Stromquelle und die Sekundärwicklung (20) mit zwei Elektroden (16) verbunden ist.

8. Vorrichtung nach Anspruch 1, 6 und 7, dadurch **gekennzeichnet**, daß die mindestens eine Elektrode (16) eine geeignete Form wie eine zylindrische und/oder eine laminare Form hat.

9. Vorrichtung nach einem oder mehreren der vorhergehenden Ansprüche, **gekennzeichnet** durch mindestens einen Kopf (10, 11), der einen Laserstrahl aussendet, um den aus mehreren Schichten (4 bis 7) bestehenden Überzug zu entfernen, wobei der Überzug möglicherweise keine leitenden Schichten enthält.

10. Verfahren zum Entfernen von Überzügen, die aus mehreren auf die Oberfläche (2) einer Glasplatte (1) aufgebrachten Schichten (4 bis 7) bestehen, von denen mindestens eine (5, 6) eine leitende Schicht ist, dadurch **gekennzeichnet**, daß in einem ersten Schritt die Glasplatte (1) in die Nähe einer oder mehrerer Elektroden (16) bewegt wird, in einem zweiten Schritt die mindestens eine Elektrode (16) nahe an die Kante (12) der Glasplatte (1) bewegt oder nahe an dieser positioniert wird, in einem dritten Schritt in der mindestens einen Elektrode (16) ein Strom zum Zirkulieren gebracht wird und in einem vierten Schritt die Glasplatte (1) oder die mehreren Elektroden (16) entlang der Kante bewegt werden, um selektiv eine oder mehrere der Schichten zu entfernen.

11. Verfahren nach Anspruch 10, dadurch **gekennzeichnet**, daß in dem ersten Schritt die Glasplatte auf ein Gestell geladen und an eine Referenzposition für einen ersten Kopf und einen zweiten Kopf gebracht wird.

12. Verfahren nach Anspruch 10, dadurch **gekennzeichnet**, daß in dem zweiten Schritt die Elektroden (16) zu dem nahe der Kante (12) der Glasplatte (1) angeordneten Überzug (3) bewegt oder an diesem positioniert werden.

13. Verfahren nach einem der Ansprüche 10, 11 und 12, dadurch **gekennzeichnet**, daß die mehreren Elektroden (16) in dem dritten Schritt mit Strom gespeist werden und in einem optionalen, gleichzeitigen vierten Schritt der zweite Kopf (11) einen aufwärts gerichteten vertikalen Stoß ausführt, wobei eine oder mehrere der Schichten (4 bis 7) des Überzugs (3) selektiv entfernt werden.

14. Verfahren nach einem der Ansprüche 10 bis 13, dadurch **gekennzeichnet**, daß ein geeigneter Sensor den zweiten Kopf (11) an der oberen horizontalen Kante der Glasplatte (1) anhält und gleichzeitig der zweite Kopf (11) eine 90°-Drehung ausführt, wobei die Elektroden (16) an der Kante (12) der oberen Seite der Glasplatte (1) angeordnet werden, daß der erste Kopf (10) gleichzeitig die mindestens eine Elektrode (16) an der Kante der unteren Seite der Glasplatte (1) plaziert und nachfolgend ein zum Bewegen der Glasplatte (1) ausgebildeter Rollenförderer (8) betätigt wird und dann eine oder mehrere der Schichten (4 bis 7) des Überzugs (3) selektiv entfernt werden.

15. Verfahren nach einem der Ansprüche 10 bis 14, dadurch **gekennzeichnet**, daß der erste Kopf (10) weiterhin die mindestens eine Elektrode (16) von der Glasplatte (1) weg bewegt und der zweite Kopf (11) eine weitere Drehung um 90° ausführt, sich dann nach unten bewegt, den Überzug (3) selektiv entfernt, bis er das untere Ende der Glasplatte (1) erreicht, und dann von dieser weg bewegt wird.

16. Verfahren nach einem der Ansprüche 10 bis 15, dadurch **gekennzeichnet**, daß die Glasplatte (1) gerade oder gekrümmte Konturen hat.

17. Verfahren nach einem oder mehreren der Ansprüche 10 bis 16, dadurch **gekennzeichnet**, daß die Bewegungen der Glasplatte (1) und/oder des mindestens einen Kopfes (10, 11), der mit der mindestens einer Elektrode (16) versehen ist, mit elektronisch gesteuerten Antriebsvorrichtungen ausgeführt werden, die ausgebildet sind, die Bedingungen der Beschleunigungs- und der Verzögerungsgradienten der Glasplatte (1) oder des mindestens einen Kopfes (10, 11) in kontrollierter Weise handzuhaben.

18. Verfahren nach einem oder mehreren der Ansprüche 10 bis 17, **gekennzeichnet** durch einen weiteren Schritt, in dem die gasförmigen Produkte, die während des selektiven oder kontrollierten Entfernens einer oder mehrerer Schichten des Überzugs freigesetzt worden sind, durch Verwendung einer oder mehrerer geeigneter Abzugshauben entfernt werden.

19. Verfahren nach einem oder mehreren der Ansprüche 10 bis 17, dadurch **gekennzeichnet**, daß die Behandlungselektroden (16) mit einem geeigneten Füllgas ergänzt werden, das schützende oder reaktive Funktionen hat.

20. Verfahren nach einem oder mehreren der Ansprüche 10 bis 17 und 19, dadurch **gekennzeichnet**, daß die selektive oder kontrollierte Entfernung auf der Glasplatte (1) durchgeführt wird, während diese in einer im wesentlichen vertikalen oder horizontalen oder geneigten Ebene angeordnet ist.

21. Verfahren nach einem oder mehreren der Ansprüche 10 bis 17 und 19 bis 21, dadurch **gekennzeichnet**, daß die selektive kontrollierte Entfernung der mindestens einen Schicht (4 bis 7) vollautomatisch oder halbautomatisch oder manuell erfolgt.

## Revendications

1. Dispositif pour enlever un revêtement (3) comportant une pluralité de couches (4-7) incluant au moins une couche conductrice (5, 6) et déposées sur la surface (2) d'une plaque de verre (1), comportant au moins une tête (10, 11) qui peut se déplacer le long du bord (12) de ladite plaque de verre (1), ladite au moins une tête ayant au moins une électrode (16) qui est adaptée pour entraîner la circulation d'un courant électrique et/ou une décharge électrique sur ladite surface (2) pour enlever de manière sélective une ou plusieurs desdites couches (4-7),
caractérisé en ce qu'il comporte de plus un convoyeur à rouleaux adapté (8) pour le support inférieur et un râtelier (9) pour le support arrière et le transport de ladite plaque de verre (1), vers ladite au moins une tête, ladite au moins une tête comportant une première tête fixe (10) et une seconde tête mobile (11).

2. Dispositif selon la revendication 1, caractérisé en ce qu'il comporte de plus des actionneurs commandés pour commander les déplacements de la plaque de verre et/ou des têtes (10, 11) de sorte que le revêtement (3) soit enlevé de manière sélective d'une plaque de verre (1) pouvant être accouplée à une autre plaque de verre simple similaire ou ordinaire, par l'intermédiaire d'un premier joint, au niveau d'un châssis écarteur de manière à constituer l'espace intérieur d'une unité de vitrage isolant, le châssis écarteur comportant un profil fermé qui est creux intérieurement, ledit profil ayant des trous fins adaptés sur la surface située au niveau de l'espace intérieur et contenant à l'intérieur des matériaux hygroscopiques, ladite plaque de verre (1) ayant, au niveau de la surface (2) qui est située en contact avec ledit espace intérieur, le revêtement (3) comportant une pluralité de couches (4-7) de matériau du type utilisé pour ce qu'on appelle un traitement de "faible pouvoir émissif" ou d'autres traitements, tels que ceux destinés à produire une plaque de verre teintée ou réfléchissante ou photochromique.

3. Dispositif selon les revendications 1 et 2, caractérisé en ce que ladite première tête (10) agit au niveau du bord inférieur (12) de ladite plaque de verre (1).

4. Dispositif selon les revendications 1 et 2, caractérisé en ce que ladite seconde tête (11) est associée de manière mobile à une courroie motorisée adaptée (13) pour se déplacer pratiquement verticalement et pour tourner sur 90° et 180° par rapport à un axe de ladite courroie (13).

5. Dispositif selon les revendications 1, 3, et 4, caractérisé en ce qu'il comporte de plus un premier chariot (14) pour acheminer ladite plaque de verre (1) dans une direction horizontale, ledit premier chariot (14) ayant des ventouses destinées à venir en contact avec ladite plaque de verre (1) sur le côté qui se trouve opposé au côté sur lequel est appliqué ledit revêtement (3) et à transporter ladite plaque de verre en direction desdites têtes d'enlèvement de revêtement (10, 11), un second chariot (18) pour le déplacement vertical de ladite seconde tête (11), chacune desdites première (10) et seconde (11) têtes ayant une pluralité d'électrodes (16) qui sont alimentées par des sources appropriées et sont adaptées pour entraîner la circulation d'un courant électrique et/ou une décharge électrique au niveau de la surface dudit revêtement (3) pour enlever de manière sélective une ou plusieurs desdites couches sous-jacentes (4-7).

6. Dispositif selon les revendications 1 et 5, caractérisé en ce que lesdites première et seconde têtes (10, 11) ont des moyens électriques et/ou électroniques (17, 18) qui sont adaptés pour provoquer la circulation d'un courant électrique et/ou la décharge électrique au niveau de ladite une ou plusieurs électrodes (16).

7. Dispositif selon les revendications 1 et 6, caractérisé en ce que lesdits moyens sont du type électrique et sont constitués par un transformateur (18), dans lequel l'enroulement primaire (19) est associé à une source de courant et l'enroulement secondaire (20) est relié aux deux électrodes (16).

8. Dispositif selon les revendications 1, 6, et 7, caractérisé en ce que lesdites une ou plusieurs électrodes (16) ont une forme quelconque adaptée, telle qu'une forme cylindrique et/ou laminaire.

9. Dispositif selon l'une quelconque des revendications précédentes, caractérisé en ce qu'il comporte au moins une tête (10, 11) qui émet un faisceau laser pour l'enlèvement commandé dudit revêtement constitué par une pluralité de couches (4-7), ledit revêtement, pouvant ne pas comporter de couche conductrice.

10. Procédé pour enlever des revêtements constitués d'une pluralité de couches (4-7) incluant au moins une couche conductrice (5, 6) et appliquées sur la surface (2) de ladite plaque de verre (1), caractérisé en ce qu'il comporte : une première étape destinée à déplacer ladite plaque de verre (1) jusqu'au voisinage d'une ou plusieurs électrodes (16), une deuxième étape pour déplacer ou positionner lesdites une ou plusieurs électrodes (16) à proximité du bord (12) de ladite plaque de verre (1), une troisième étape dans laquelle un courant est amené à circuler dans lesdites une ou plusieurs électrodes (16), et une quatrième étape dans laquelle ladite plaque de verre (1) ou ladite pluralité d'électrodes (16) sont déplacées le long dudit bord pour enlever de manière sélective une ou plusieurs desdites couches.

11. Procédé selon la revendication 10, caractérisé en ce que dans ladite première étape, ladite plaque de verre est chargée sur un râtelier et est transportée vers une position de référence d'une première tête et d'une seconde tête.

12. Procédé selon la revendication 10, caractérisé en ce que dans ladite deuxième étape, lesdites électrodes (16) sont déplacées ou positionnées au niveau dudit revêtement (3) à proximité du bord (12) de ladite plaque de verre (1).

13. Procédé selon l'une quelconque des revendications 10, 11 et 12, caractérisé en ce que les électrodes de ladite pluralité d'électrodes (16) sont alimentées en courant dans ladite troisième étape, et en ce que dans une quatrième étape simultanée facultative, ladite seconde tête (11) réalise une course verticale vers le haut, enlevant de manière sélective une ou plusieurs desdites couches (4-7) dudit revêtement (3).

14. Procédé selon l'une quelconque des revendications 10 à 13, caractérisé en ce qu'un détecteur adapté arrête ladite seconde tête (11) au niveau du bord horizontal supérieur de ladite plaque de verre (1) et simultanément ladite seconde tête (11) réalise une rotation de 90°, agençant les électrodes (16) au niveau du bord (12) du côté supérieur de ladite plaque de verre (1), ladite première tête (10) plaçant simultanément lesdites une ou plusieurs électrodes (16) au niveau du bord (12) du côté inférieur de ladite plaque de verre (1), ceci étant suivi par l'actionnement d'un convoyeur à rouleaux (8) qui est adapté pour déplacer ladite plaque de verre (1) et ensuite par l'enlèvement sélectif d'une ou plusieurs desdites couches (4-7) dudit revêtement (3).

15. Procédé selon l'une quelconque des revendications 10 à 14, caractérisé en ce que ladite première tête (10) déplace en outre lesdites une ou plusieurs électrodes (16) en les éloignant de ladite plaque de verre (1) et ladite seconde tête (11) réalise une rotation supplémentaire de 90° et se déplace ensuite vers le bas et enlève de manière sélective ledit revêtement (3) jusqu'à ce qu'elle atteigne l'extrémité inférieure de ladite plaque de verre (1) et ensuite s'éloigne de celle-ci.

16. Procédé selon l'une quelconque des revendications 10 à 15, caractérisé en ce que ladite plaque de verre (1) a des contours rectilignes ou incurvés.

17. Procédé selon l'une quelconque des revendications 10 à 16, caractérisé en ce que les déplacements de ladite plaque de verre (1) et/ou de ladite au moins une tête (10, 11) munie desdites une ou plusieurs électrodes (16) sont réalisés par l'intermédiaire d'actionneurs qui sont commandés électroniquement et sont adaptés pour manipuler, d'une manière commandée, les conditions des gradients d'accélération et de décélération de ladite plaque de verre (1) ou de ladite au moins une tête (10, 11).

18. Procédé selon l'une quelconque des revendications 10 à 17, caractérisé en ce qu'il comporte de plus l'étape consistant à enlever les produits gazeux libérés pendant l'enlèvement sélectif ou commandé desdites une ou plusieurs couches dudit revêtement, en utilisant un ou plusieurs capots d'aspiration adaptés.

19. Procédé selon l'une quelconque des revendications 10 à 17, caractérisé en ce que lesdites électrodes de traitement (16) sont complétées par un gaz remplisseur adapté ayant des fonctions de protection ou de réaction.

20. Procédé selon l'une quelconque des revendications 10 à 17 et 19, caractérisé en ce que ladite suppression sélective ou commandée est réalisée sur ladite plaque de verre (1) alors qu'elle est agencée sur un plan sensiblement vertical ou horizontal ou incline.

21. Procédé selon l'une quelconque des revendications 10 à 17 et 19 à 20, caractérisé en ce que ledit enlèvement commandé sélectif desdites une ou plusieurs couches (4-7) est réalisé d'une manière entièrement automatique ou semi-automatique ou manuelle.
